# DEMANDE DE BREVET EUROPEEN

(11) **EP 2 244 215 A1**
(43) Date de publication de la demande: **27.10.2010**
(21) Numéro de dépôt: 09178553.5
(22) Date de dépôt: 09.12.2009
(51) Int. Cl.: G06Q 10/00, G01C 23/00

(54) **Système et procédé d'interaction et de représentation holistique de taches**

(30) Priorité: 22.04.2009 FR 0901945
(71) Demandeur: Thales, 92200 Neuilly Sur Seine (FR)
(72) Inventeur: Perbet, Jean-Noël, 33320 Eysines (FR); Duban, Benjamin, 33000 Bordeaux (FR)
(74) Mandataire: Bréda, Jean-Marc

(57) **Abrégé**

Le domaine général de l'invention est celui des systèmes de visualisation comprenant des premiers moyens (101) permettant de traiter et de mémoriser les différentes données nécessaires à l'accomplissement d'un processus technique ou industriel, des seconds moyens (102) permettant de déterminer les différentes tâches à accomplir par un utilisateur au cours du processus à partir des données précédentes, un calculateur (103) de génération d'images graphiques associé à un dispositif de visualisation (104) et une interface homme-machine (105) avec ledit dispositif de visualisation. Le dispositif de visualisation selon l'invention affiche une succession d'icones graphiques (10, 11, 12, 13, 17), chaque icône représentant une tâche à accomplir, les différentes icones étant ordonnées selon une échelle des temps s'étendant du début à la fin du processus. Le système et le procédé selon l'invention sont de types globaux ou holistiques. Un certain nombre d'opérations sur ces icones peuvent être effectuées au moyen de l'interface homme-machine. Le domaine privilégié de l'invention est celui des planches de bord d'aéronefs.

## Description

Le domaine de l'invention est celui des systèmes et des procédés associés d'interaction et de représentation graphique des tâches à effectuer au cours de la conduite d'un processus technique complexe s'étalant dans le temps. Il s'applique notamment à la conduite d'un vol ou d'une mission d'aéronef. On entend par « vol » non seulement le vol de l'aéronef proprement dit mais également les phases de préparation de vol, de roulage, de décollage, de vol et d'atterrissage de l'aéronef. Le terme de « mission » est mieux adapté pour désigner un vol d'aéronef militaire ayant un but particulier (reconnaissance, surveillance, interception, destruction,...).

Compte-tenu de la complexité des aéronefs modernes et des différentes procédures nécessaires au pilotage et à la navigation, la gestion d'un vol ou d'une mission d'un aéronef moderne nécessite un grand nombre de tâches à accomplir par le pilote ou l'équipage. Pour faire son travail, l'équipage dispose aujourd'hui d'interfaces homme-machine sophistiquées composées essentiellement d'écrans de visualisation et de postes de commande disposés sur la planche de bord et interfacés avec le Système de Management de Vol, plus connu sous l'acronyme anglo-saxon de « FMS » (Flight Management System). Compte-tenu des progrès technologiques, il est possible de disposer sur la planche de bord d'écrans de grande taille à haute résolution et de calculateurs électroniques permettant d'afficher un grand nombre de données et de paramètres du vol. Ainsi, dès 1997, le brevet US 6 112 141 de la société Dassault décrit de façon précise un système de bord comprenant un calculateur électronique, des moyens de sélection et de grands écrans d'affichage permettant d'afficher les différentes informations nécessaires au pilotage et à la navigation. La technologie n'étant plus une contrainte forte, il est donc fondamental de déterminer la meilleure façon de représenter graphiquement les données et les informations nécessaires de façon que le pilote puisse accomplir son travail de la façon la plus intuitive possible et, bien entendu, dans les meilleures conditions de sécurité possibles.

Parmi les représentations classiques des tâches à accomplir, on peut regrouper les informations par phase de vol. Ainsi, le pilote peut disposer sur un écran de toutes les informations nécessaires à configurer le cockpit avant l'atterrissage. Le brevet US 6 707 475 de la société Honeywell intitulé « System for selecting and displaying flight management system procedures » décrit ce type de représentation. Cette méthode est notamment mise en oeuvre sur les « Falcon » de la société Dassault. On peut également afficher des « check-lists » ou des « To do lists » des tâches à accomplir. Cette dernière technique est notamment mise en oeuvre sur les avions des sociétés Airbus et Boeing. Bien entendu, le pilote utilise également des manuels de vol qui peuvent être sous forme papier ou sous forme électronique. Tous ces systèmes présentent certains inconvénients. Le pilote ou l'équipage n'a pas une connaissance précise de la charge de travail qui l'attend. Ainsi, le « tempo » de la mission lui manque. D'autre part, les informations sur les tâches accomplies ou non accomplies dans le passé ne lui sont pas fournies. Ainsi, si au cours de la phase de vol précédente, une tâche n'a pas complètement effectuée, il est presque certain que cette information sera perdue. Enfin, au cours d'une phase de vol, rien ne lui indique que certaines tâches sont interdites.

Le système et le procédé selon l'invention ne présentent pas ces inconvénients. A la différence des systèmes et des procédés actuels qui sont de type séquentiel, le système et le procédé selon l'invention sont de types globaux ou holistiques.

Plus précisément, l'invention a pour objet un système de visualisation comprenant au moins des premiers moyens permettant de traiter et de mémoriser les différentes données nécessaires à l'accomplissement d'un processus technique ou industriel, des seconds moyens permettant de déterminer les différentes tâches à accomplir par un utilisateur au cours du processus à partir des données précédentes, un calculateur de génération d'images graphiques associé à un dispositif de visualisation et une interface homme-machine avec ledit dispositif de visualisation, **caractérisé en ce que** ledit dispositif de visualisation affiche une succession d'icones graphiques, chaque icône représentant une tâche à accomplir, les différentes icones étant ordonnées selon une échelle des temps s'étendant du début à la fin du processus.

L'invention s'applique tout particulièrement aux systèmes de visualisation de planche de bord d'aéronef, le processus technique étant un vol ou une mission dudit aéronef, l'utilisateur étant un des membres de l'équipage de l'aéronef.

Avantageusement, le dispositif de visualisation affiche un symbole représentatif de l'aéronef, la position du symbole sur l'échelle des temps représentant l'aéronef à l'instant présent de façon que les icones disposées avant le symbole représentent les tâches passés et que les icones disposées après le symbole représentent les tâches futures.

Avantageusement, les icones représentant les tâches effectuées ont une représentation différente des icones représentant les taches encore à effectuer ; les icones représentant les tâches non effectuées et qui auraient dû l'être ont une représentation différente des icones représentant des tâches effectuées ou à effectuer. De plus, certaines icones représentent des tâches interdites. Enfin, certaines icones représentent les tâches à effectuer par un opérateur donné.

Avantageusement, lorsqu'un espace de temps déterminé comporte un grand nombre de tâches, l'interface homme-machine comporte des moyens permettant soit de réaliser un « zoom » de cette espace de temps, soit une expansion, soit une réorganisation. De plus, un symbole reliant au moins deux icones peut être représentatif du rythme de réalisation des tâches représentées par lesdites deux icones. Enfin, lorsqu'une nouvelle tâche future de type alarme apparaît, une icone spécifique est affichée.

Avantageusement, l'interface homme-machine comporte des moyens permettant de faire apparaître pour une icone représentant une tâche donnée, soit d'autres icones représentant des tâches associées, soit des fenêtres graphiques, soit des menus.

Avantageusement, l'échelle des temps est horizontale et en ce que le dispositif de visualisation affiche également, sous la ligne des icones graphiques soit une vue en coupe verticale du terrain survolé au cours du vol ou de la mission, soit une vue en coupe verticale de plan de vol.

Préférentiellement, les icones ont la forme de cercles de taille différente. Elles peuvent également avoir la forme de polygones ou un ensemble les formes géométriques, des cercles et des polygones.

Avantageusement, l'échelle des temps est centrée sur l'instant présent et est limitée à une durée inférieure à celle du processus complet.

L'invention sera mieux comprise et d'autres avantages apparaîtront à la lecture de la description qui va suivre donnée à titre non limitatif et grâce aux figures annexées parmi lesquelles :
La figure 1 représente une vue du système selon l'invention ;
La figure 2 représente un premier exemple d'affichage selon l'invention ;
Les figures 3 à 7 représentent des vues de détail d'un affichage selon l'invention.
La figure 8 représente un second exemple d'affichage selon l'invention

Pour des raisons de clarté, l'exemple de système de visualisation selon l'invention décrit ci-dessous concerne le domaine aéronautique et plus précisément celui des planches de bord pour aéronef. Bien entendu, le système selon l'invention pourrait s'appliquer à d'autres domaines techniques comme la gestion de processus de fabrication industrielle.

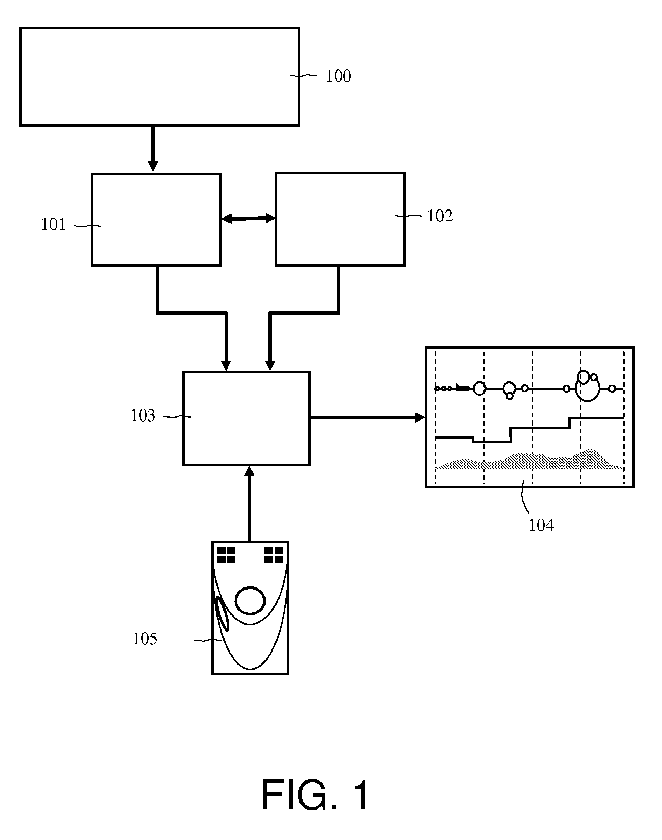

Un système de visualisation selon l'invention pour aéronef est représenté en figure 1. Il comprend :
- des premiers moyens 101 permettant de traiter et de mémoriser le contexte du vol, c'est-à-dire les différentes données spécifiques nécessaires à l'accomplissement d'un vol ou d'une mission de l'aéronef. Par exemple, s'il s'agit d'un vol commercial, les aéroports de départ et d'arrivée, le plan de vol et ses différents points de passage, les heures de décollage et d'atterrissage,...Ces premiers moyens sont interfacés avec l'ensemble du système avion 100 ;
- des seconds moyens 102 permettant de déterminer les différentes tâches à accomplir par le pilote au cours du vol ou de la mission à partir des données précédentes. Il s'agit de déterminer, d'adapter les procédures générales comme le décollage ou l'atterrissage au contexte précédent, c'est-à-dire à des aéroports particuliers ;
- un calculateur électronique 103 de génération d'images graphiques dont les données d'entrée sont issues des moyens précédents ;
- un dispositif de visualisation 104 ou un ensemble de dispositifs de visualisation interfacés avec le calculateur de génération d'images graphiques. Ces visualisations sont disposées par exemple sur la planche de bord ou sur un écran interactif positionné en plafond de cockpit a l'emplacement de l'overhead control panel.. L'affichage des icones ou des images graphiques représentant les tâches à accomplir peut se faire sur une visualisation particulière, dédiée à cette tâche. Elle peut également se faire sur plusieurs dispositifs simultanément, être reconfigurable,... ;
- une interface homme-machine 105 avec ledit dispositif de visualisation. Cette interface peut être un dispositif contrôlant un pointeur graphique à distance de type « souris » informatique. On parle alors de « CCD », acronyme de « Cursor Control Device ». Cette interface peut être aussi un poste de commande, une surface tactile ou tout autre moyen permettant d'interagir directement ou a distance avec les moyens d'affichage. Cette désignation pourra avantageusement utiliser Id'autres commandes de type reconnaissance vocale ou de type multimodale en combinant plusieurs moyens de dialogue et d'interaction. Cette interface holistique permet d'accéder à l'ensemble des icones, des données et des différentes commandes affichées en toute liberté, sans ordre pré-déterminé.

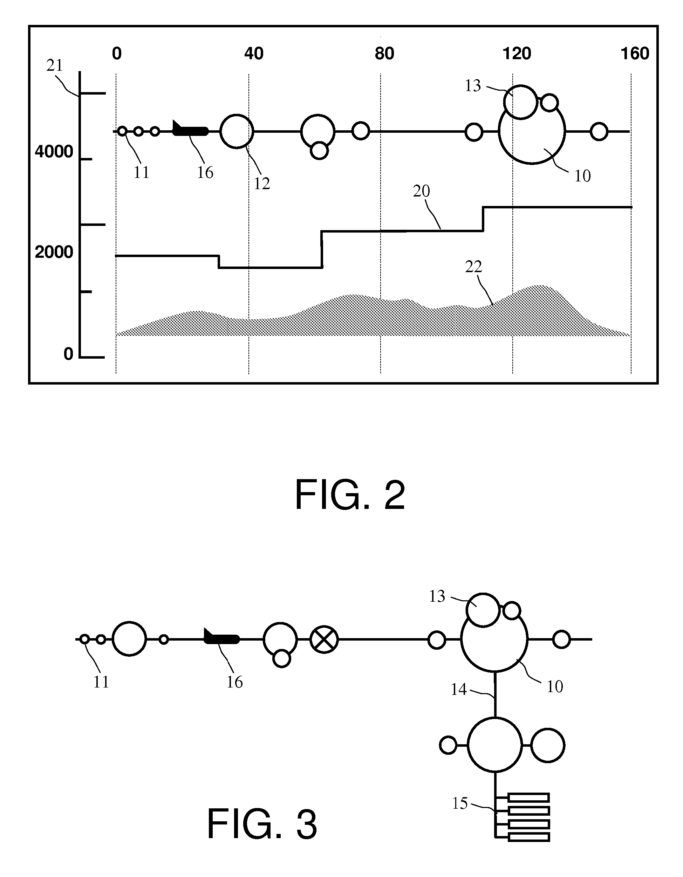

La figure 2 représente un premier exemple d'affichage selon l'invention. La représentation graphique selon l'invention consiste essentiellement à afficher une succession d'icones graphiques 10, chaque icône représentant une tâche à accomplir, les différentes icones étant ordonnées selon une échelle des temps s'étendant du début à la fin du vol ou de la mission. Ainsi, sur la figure 1, l'échelle des temps est graduée toutes les 40 minutes, la durée totale de la mission étant de 160 minutes. On peut également représenter en plus des icones représentant les tâches à accomplir des informations concernant le système de l'appareil, ses ressources, des menaces ou dangers potentiels, des messages,...

Sur cette figure 2, les icones sont représentées par des cercles 10, 11, 12 et 13 de différentes tailles. Il est possible d'adopter d'autres formes géométriques. On peut également mélanger les formes géométriques, des cercles et des polygones, par exemple.

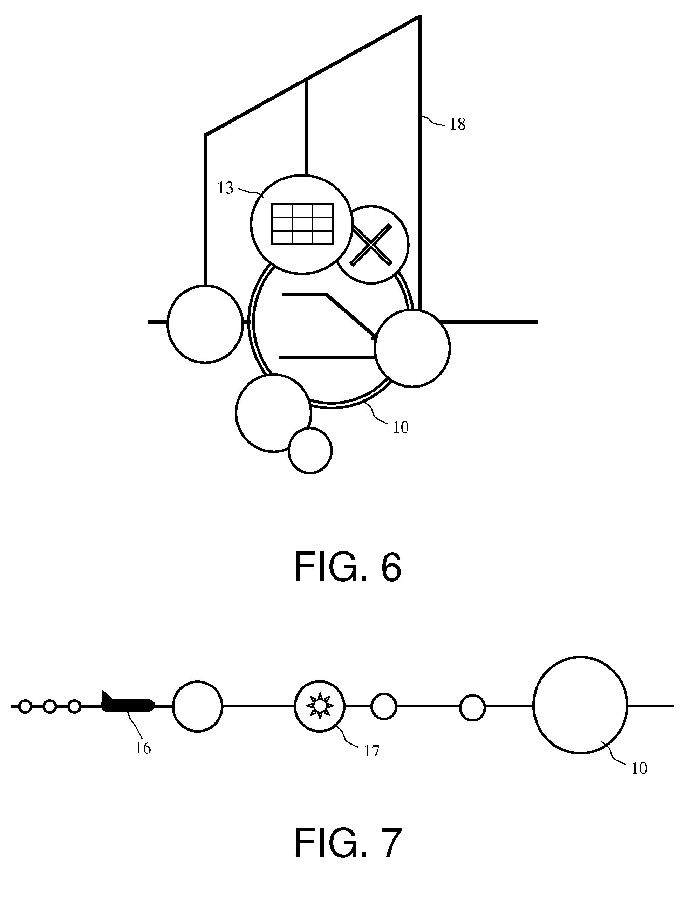

Les représentations des cercles peuvent être représentatives soit de l'importance de la tâche, soit de son accomplissement. Ainsi, les icones représentant les tâches effectuées ont une représentation différente des icones représentant les taches encore à effectuer, les icones représentant les tâches non effectuées et qui auraient dû l'être, ont également une représentation différente des icones représentant des tâches effectuées ou à effectuer, enfin certaines icones représentent des tâches interdites. De la même façon, certaines icones peuvent représenter des tâches à effectuer par un opérateur donné. Enfin, lorsqu'une nouvelle tâche future de type alarme apparaît, une icone spécifique est affichée comme indiqué sur l'icône 17 de la figure 7.

Lorsqu'une tâche est effectuée ou lorsqu'une tâche qui aurait dû être effectuée ne l'a pas été à temps, son changement de représentation est automatique, pilotée par le calculateur, sans interventions humaines. Il est à noter que les tâches effectuées peuvent être, pour simplifier le graphique, totalement supprimées. On peut utiliser, pour ces différentes représentations la taille des cercles. Ainsi, une tâche accomplie comme la tâche 11 de la figure 2 est représentée par un cercle de tout petit diamètre, signifiant qu'elle est déjà accomplie. On peut, bien entendu, utiliser également d'autres modes de représentation comme la couleur, le contraste, la semi-transparence, le changement d'aspect périodique ou le clignotement.

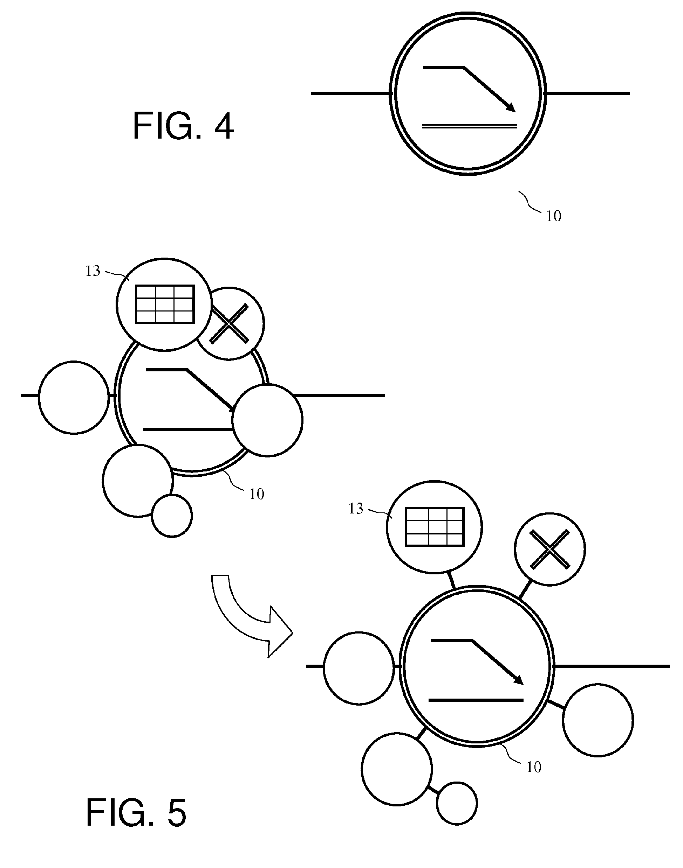

Les icones peuvent comporter un symbole représentatif de la tâche à accomplir, en utilisant préférentiellement les symboles classiquement utilisés en aéronautique. Ainsi, l'icone de la figure 4 comporte une flèche brisée orientée vers le bas représentant la phase de descente ou d'approche de l'appareil. De la même façon, un symbole représentant un émetteur radiofréquence symbolisera les télécommunications.

Sur une icône principale, il est également possible de greffer d'autres icones secondaires représentant par exemple l'état des ressources disponibles pour accomplir la tâche. Ainsi, l'icone 13 est accolée à l'icône 10. Comme indiqué sur la figure 3, il est également possible d'ajouter sur une icône principale d'autres embranchements 14, des listes de tâches 15 et plus généralement tout type de fenêtres telles qu'elles existent dans l'environnement « Windows » défini par la société « Microsoft ».

Lorsque le nombre de tâches à accomplir dans un laps de temps donné est très important, le graphique comportant alors un grand nombre d'icones dans un espace restreint, il est alors possible, pour des raisons de clarté, soit de « zoomer » sur cet espace, soit de le dilater temporellement, soit de réaliser un « éclaté », une « réorganisation ». Cette opération est plus connue sous le terme anglo-saxon de « decluttering ». Elle consiste à éclater autour d'une tâche principale les tâches secondaires de façon qu'elles ne se chevauchent pas, qu'elles soient reliées à la tâche principale et qu'elles apparaissent clairement. A titre d'exemple, cette opération est représentée en figure 5 qui représente un regroupement d'icones avant et après « decluttering ».

Un autre mode de représentation consiste à représenter sous une forme intuitive l'ensemble des tâches à accomplir dans un laps de temps donné en les reliant entre elles par un symbole 18 de « rythme » comme indiqué sur la figure 6. Sur cette figure, le symbole de rythme est constitué de branches verticales reliées entre elles par une branche oblique. Ce symbole est très proche de celui utilisé en solfège.

L'échelle des temps peut également comporter un symbole 16 représentant l'aéronef à l'instant présent. On peut bien entendu représenter la totalité de l'échelle des temps. Lorsque le nombre de tâches est considérable, il peut être plus judicieux d'utiliser une fenêtre « glissante », l'échelle des temps étant centrée sur l'instant présent et étant limitée à une durée inférieure à celle du processus complet.

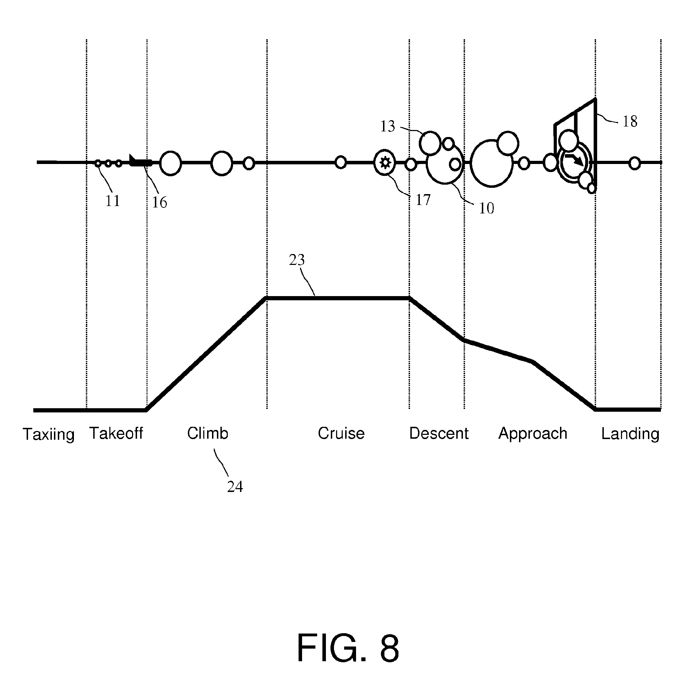

En complément de l'échelle des tâches, il est possible d'ajouter, comme représenté sur la figure 1, les différentes altitudes 20 d'un plan de vol en fonction d'une échelle verticale d'altitude 21 ou une vue en coupe du terrain 22 représentée en gris sur la figure 1. Il est également possible, comme représenté sur la figure 8, d'ajouter sous l'échelle des tâches, un plan de vol 23, fonction de l'altitude avec ses différentes phases 24 notées « Taxiing », « Takeoff », « Climb », « Cruise », « Descent », « Approch » et « Landing » signifiant respectivement « Roulage au sol », « Décollage », « Montée », « Vol de croisière », « Descente », « Approche » et « Atterrissage ». On retrouve sur cette figure les icones 11, 13, 17 et 18 décrites précédemment.

Ainsi, le pilote dispose à tout moment de l'ensemble des informations concernant ce qu'il a fait, ce qu'il n'a pas fait et ce qu'il a à faire. De plus, le rythme, le « tempo » de ce qu'il aura à faire lui est indiqué très clairement, permettant d'anticiper certaines tâches.

## Revendications

1. Système de visualisation comprenant au moins des premiers moyens (101) permettant de traiter et de mémoriser les différentes données nécessaires à l'accomplissement d'un processus technique ou industriel, des seconds moyens (102) permettant de déterminer les différentes tâches à accomplir par un utilisateur au cours du processus à partir des données précédentes, un calculateur (103) de génération d'images graphiques associé à un dispositif de visualisation (104) et une interface homme-machine (105) avec ledit dispositif de visualisation, **caractérisé en ce que** ledit dispositif de visualisation affiche une succession d'icones graphiques (10, 11, 12, 13, 17), chaque icône représentant une tâche à accomplir, les différentes icones étant ordonnées selon une échelle des temps s'étendant du début à la fin du processus.

2. Système de visualisation selon la revendication 1, **caractérisé en ce que** le système de visualisation est un système de planche de bord d'aéronef, le processus technique un vol ou une mission dudit aéronef, l'utilisateur étant un des membres de l'équipage de l'aéronef.

3. Système de visualisation selon la revendication 2, **caractérisé en ce que** le dispositif de visualisation affiche un premier symbole (16) représentatif de l'aéronef, la position du symbole sur l'échelle des temps représentant l'aéronef à l'instant présent de façon que les icones (11) disposées avant le premier symbole (16) représentent les tâches passés et que les icones (12) disposées après le premier symbole représentent les tâches futures.

4. Système de visualisation selon l'une des revendications 1 ou 2, **caractérisé en ce que** les icones représentant les tâches effectuées ont une représentation différente des icones représentant les taches encore à effectuer.

5. Système de visualisation selon l'une des revendications précédentes, **caractérisé en ce que** les icones représentant les tâches non effectuées et qui auraient dû l'être, ont une représentation différente des icones représentant des tâches effectuées ou à effectuer.

6. Système de visualisation selon l'une des revendications précédentes, **caractérisé en ce que** certaines icones représentent des tâches interdites.

7. Système de visualisation selon l'une des revendications précédentes, **caractérisé en ce que** certaines icones représentent les tâches à effectuer par un opérateur donné.

8. Système de visualisation selon l'une des revendications précédentes, **caractérisé en ce que** lorsqu'un espace de temps déterminé comporte un grand nombre de tâches (10, 13), l'interface homme-machine comporte des moyens permettant soit de réaliser un « zoom » de cette espace de temps, soit une expansion, soit une réorganisation.

9. Système de visualisation selon l'une des revendications précédentes, **caractérisé en ce qu'**un second symbole (18) reliant au moins deux icones est représentatif du rythme de réalisation des tâches représentées par lesdites deux icones.

10. Système de visualisation selon l'une des revendications précédentes, **caractérisé en ce que** lorsqu'une nouvelle tâche future de type alarme apparaît, une icone spécifique (17) est affichée.

11. Système de visualisation selon l'une des revendications précédentes, **caractérisé en ce que** l'interface homme-machine comporte des moyens permettant de faire apparaître pour une icone représentant une tâche donnée, soit d'autres icones représentant des tâches associées, soit des fenêtres graphiques, soit des menus.

12. Système de visualisation selon l'une des revendications 2 à 11, **caractérisé en ce que** l'échelle des temps est horizontale et **en ce que** le dispositif de visualisation affiche également, sous la ligne des icones graphiques une vue en coupe verticale (22) du terrain survolé au cours du vol ou de la mission.

13. Système de visualisation selon l'une des revendications 2 à 12, **caractérisé en ce que** l'échelle des temps est horizontale et **en ce que** le dispositif de visualisation affiche également, sous la ligne des icones graphiques une vue en coupe verticale (20) de plan de vol.

14. Système de visualisation selon l'une des revendications précédentes, **caractérisé en ce que** les icones (10) ont la forme de cercles de taille différentes.

15. Système de visualisation selon l'une des revendications précédentes, **caractérisé en ce que** les icones ont la forme de polygones ou un ensemble les formes géométriques, des cercles et des polygones.

16. Système de visualisation selon l'une des revendications précédentes, **caractérisé en ce que** l'échelle des temps est centrée sur l'instant présent et est limitée à une durée inférieure à celle du processus complet.
